# EUROPÄISCHE PATENTSCHRIFT

(11) **EP 2 516 224 B1**
(45) Veröffentlichungstag und Bekanntmachung des Hinweises auf die Patenterteilung: **08.06.2016**
(21) Anmeldenummer: 10778901.8
(22) Anmeldetag: 25.10.2010
(51) Int. Cl.: B60T 8/1761, B60T 8/1755

(54) **VERFAHREN ZUM STABILISIEREN EINES FAHRZEUGS IN EINER FAHRSITUATION, IN DER DAS FAHRZEUG GLEICHZEITIG GEBREMST UND GELENKT WIRD**
METHOD FOR STABILIZING A VEHICLE IN A DRIVING SITUATION IN WHICH THE VEHICLE IS SIMULTANEOUSLY BRAKED AND STEERED
PROCÉDÉ DE STABILISATION D'UN VÉHICULE DANS UNE SITUATION DE CONDUITE DANS LAQUELLE LE VÉHICULE EST EN MÊME TEMPS FREINÉ ET DIRIGÉ

(30) Priorität: 21.12.2009 DE 102009055035
(43) Veröffentlichungstag der Anmeldung: 31.10.2012
(73) Patentinhaber: Robert Bosch GmbH, 70442 Stuttgart (DE)
(72) Erfinder: BRUEGGEMANN, Rainer, 71634 Ludwigsburg (DE); FRUEH, Philipp, Clayton 3169 (AU)
(86) Internationale Anmeldenummer: PCT/EP2010/066028
(87) Internationale Veröffentlichungsnummer: WO 2011/076461

(56) Entgegenhaltungen:
- DE-A1- 4 112 284
- DE-A1- 10 150 493
- DE-A1- 10 223 847
- DE-A1- 19 820 107

## Beschreibung

### Stand der Technik

Die Erfindung betrifft ein Verfahren zum Stabilisieren eines Fahrzeugs während eines Bremsmanövers, bei dem die Vorderräder in Bremsschlupf geraten und gleichzeitig die Lenkung betätigt wird.

Wenn die Räder eines Kraftfahrzeugs bei einer Bremsung blockieren, können sie nur noch ein geringeres Bremsmoment auf die Straße übertragen. Darüber hinaus verlieren die Räder ihre Seitenführungskraft, so dass das Fahrzeug nicht mehr lenkbar ist. Auch bei Fahrzeugen mit integriertem ABS-System benötigen die Vorderräder eine gewisse Zeitdauer (Radstillstandszeit), um nach dem Blockieren wieder anzulaufen. Während dieser Zeit können sie keine Seitenkräfte auf die Fahrbahn übertragen. Die Dauer der Radstillstandszeit ist daher für die Fahrsicherheit besonders kritisch.

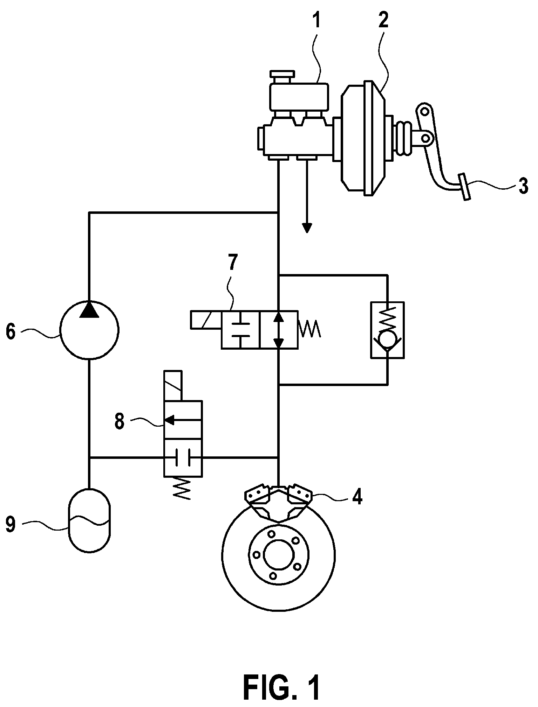

Zur Veranschaulichung der dynamischen Vorgänge bei einem herkömmlichen ABS-System wird im Folgenden auf Fig. 1 Bezug genommen. Diese zeigt ein aus dem Stand der Technik bekanntes Bremssystem, das für eine ABS-Regelung ausgelegt ist, mit einem Bremspedal 3 einem Bremskraftverstärker 2 und einem Hauptbremszylinder 1 zum Erzeugen von Bremsdruck an einer Radbremse 4. Der dargestellte Bremskreis umfasst ferner ein Einlassventil 7, die Radbremse 4, ein Auslassventil 8 und eine Rückforderpumpe 6. Bei einer Betätigung des Fuß-Bremspedals 3 wird im Bremskreis ein entsprechender Druck aufgebaut, der über das Einlassventil 7, das im Normalzustand geöffnet ist (normally open), auf die Radbremse 4 wirkt. Das Auslassventil 8 ist in diesem Zustand geschlossen (normally closed).

Bei einer ABS-Regelung wird der an der Radbremse 4 wirkende Bremsdruck mittels der Einlass- 7 und Auslassventile 8 moduliert, wobei Hydraulikfluid in einem Pufferspeicher 9 gepuffert werden kann. Eine Rückforderpumpe 6 fördert das von der Radbremse 4 kommende Hydraulikfluid dann zurück in Richtung des Hauptbremszylinders 1. Am Bremspedal 3 entsteht dadurch das typische Vibrieren des Pedals.

Die Dauer der Radstillstandszeit nach dem Blockieren eines Rades hängt im Wesentlichen davon ab, wie schnell der an der Radbremse 4 wirkende Bremsdruck abgebaut werden kann. Die Geschwindigkeit des Druckabbaus wird vor allem durch den Öffnungsquerschnitt des Auslassventils 8, die Aufnahmefähigkeit des Pufferspeichers 9 und die Förderleistung der Rückförderpumpe 6 bestimmt. Aus Kostengründen werden der Pufferspeicher 9 und die Rückforderpumpe 6 nur so groß wie unbedingt nötig ausgelegt, so dass vor allem diese beiden Komponenten für den Druckabbau limitierend sind.

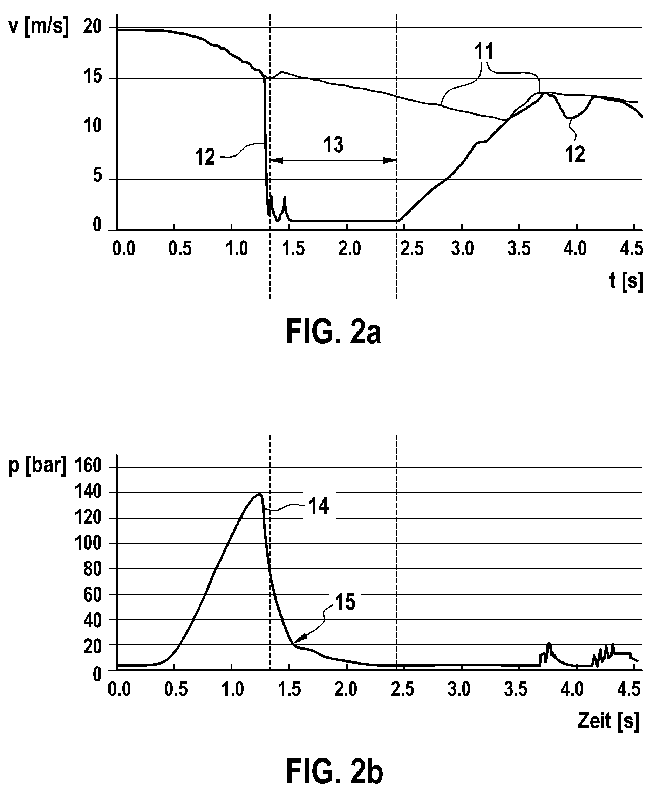

Die Fig. 2a und 2b zeigen den zeitlichen Verlauf der Radgeschwindigkeiten v und des Bremsdrucks p an den Vorderrädern für ein herkömmliches ABS-System, in einer Fahrsituation, in der die Räder etwa gleichzeitig in Bremsschlupf geraten. Da sich die Vorderräder im Wesentlichen gleich verhalten ist hier nur eine Kennlinie 12 für die Radgeschwindigkeiten gezeigt. In der hier dargestellten Fahrsituation bewegt sich das Fahrzeug zunächst mit einer Geschwindigkeit v von etwa 20 m/s (s. Kennlinie 11) geradeaus. Nach etwa 0,4 s wird ein Bremsvorgang eingeleitet, durch den der Bremsdruck p bis zu einem Wert von etwa 140 bar ansteigt. Wegen eines Übergangs auf niedrigen Reibwert (z.B. Eis, nasses Pflaster) nach ca. 1,2 s beginnen die Vorderräder zu blockieren; die Radgeschwindigkeiten 12 der beiden Vorderräder fallen gegen 0 m/s, wie in Fig. 2a zu erkennen ist. Die Fahrzeuggeschwindigkeit 11 verändert sich dagegen nur geringfügig, da das Fahrzeug mit blockierten Rädern auf niedrigem Reibwert geradeaus weiter rutscht.

Sobald der Radschlupf der Vorderräder einen bestimmten Schwellenwert übersteigt, wird an den Radbremsen 4 automatisch Druck abgebaut, indem das Auslassventil 8 geöffnet wird. Während der ersten Phase des Druckabbaus (s. Fig. 2b ab etwa 1,3 s) sinkt der Bremsdruck 14 mit maximalem Gradienten. In dieser Phase ist lediglich der Öffnungsquerschnitt des Auslassventils 8 die für den Druckabbau begrenzende Größe. Das aus der Radbremse 4 fließende Hydraulikfluid wird in dem Pufferspeicher 9 zwischengespeichert. Bei etwa 1,6 s ist der Pufferspeicher 9 vollständig gefüllt (Pfeil 15). Ab diesem Zeitpunkt wird die Dynamik des Druckabbaus durch die Förderleistung der Rückförderpumpe 6 bestimmt. Wie in Fig. 2b zu erkennen ist, verläuft der Druckabbau ab dem Zeitpunkt von 1,6 s wesentlich flacher. Erst bei etwa 2,5 s ist ein Radanlaufdruck von etwa 3 bar erreicht, ab dem das Rad wieder beginnt, anzulaufen. Die Zeitspanne zwischen dem Blockieren und dem erneuten Anlaufen der Vorderräder (Radstillstandszeit) ist hier mit dem Bezugszeichen 13 bezeichnet und beträgt etwas mehr als eine 1 s. Während dieser Zeitspanne ist das Fahrzeug nahezu unlenkbar.

Aus der Druckschrift D1 (DE 198 200 107 A1) sind ein Verfahren und eine Vorrichtung zur Verbesserung der Fahreigenschaft eines Fahrzeugs bei gebremster Kurvenfahrt bekannt. In dieser Druckschrift wird vorgeschlagen, den Fahrzustand eines Fahrzeugs daraufhin zu überwachen, ob eine Instabilität vorliegt und ob eine Kurve durchfahren wird. Wenn festgestellt wurde, dass die Instabilität über eine gewisse Schwellenzeitspanne vorliegt, wird der Bremsdruck an einem oder mehreren Rädern nach Maßgabe des Laufverhaltens der Räder modifiziert. Es ist zudem vorgesehen, den Bremsdruck an zumindest einem kurveninnenseitigen Rad abzusenken und/oder an zumindest einem kurvenaußenseitigen Rad anzuheben. Die Zeitspanne zwischen dem Blockieren beider Vorderräder und dem erneuten Anlaufen kann auf diese Weise jedoch nur unwesentlich verkürzt werden.

Auch aus den Druckschriften D2 (DE 101 50 493 A1) und D3 (DE 102 23 847 A1) sind Verfahren bekannt, denen zufolge bei Kurvenfahrten unterschiedliche Bremsdrücke an einem kurveninneren und einem kurvenäußeren Rad eingestellt werden. Nach dem aus der Druckschrift D3 bekannten Verfahren wird zwischen einem kurveninneren und kurvenäußeren Rad zudem eine Schlupfdifferenz derart eingestellt, dass das kurvenäußere Rad in Abhängigkeit eines Vergleichs von erfassten Radgeschwindigkeiten oder in Abhängigkeit von einer erfassten Gierrate oder in Abhängigkeit von einer erfassten Querbeschleunigung unterbremst wird. Auch diese Verfahren unterliegen den vorstehend angeführten Nachteilen.

Aus der Druckschrift D4 (DE 41 12 284 A1) ist eine Fahrzeuglenkverhalten-Steuervorrichtung für ein Kraftfahrzeug mit einer Antiblockier-Bremssteuerung bekannt. Die Steuervorrichtung ist derart ausgelegt, dass der Fahrzeuglenkzustand überwacht wird, und, dass nach Maßgabe des erfassten Fahrzeuglenkzustands eine Differenz zwischen einer ersten und einer zweiten Bremskraft, die an einem innenliegenden und einem außenliegenden Rad angelegt werden, eingestellt wird, so dass ein Giermoment zwischen dem innenliegenden und dem außenliegenden Rad erzeugt wird, um die Lenkung des Fahrzeugs zu unterstützen.

### Offenbarung der Erfindung

Es ist daher die Aufgabe der vorliegenden Erfindung, die Radstillstandszeit der Vorderräder während einer ABS-Regelung zu verkürzen und damit die Fahrsicherheit zu erhöhen.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, den Fahrzustand des Fahrzeugs hinsichtlich einer Fahrsituation zu überwachen, in der der Radschlupf der Vorderräder einen vorgegebenen Schwellenwert übersteigt und außerdem eine Lenkanforderung des Fahrers oder eines automatischen Assistenzsystems vorliegt. Wenn eine solche Fahrsituation erkannt wurde, wird der Bremsdruck gemäß der Erfindung zuerst an einem ersten Vorderrad und danach an einem auf der anderen Fahrzeugseite liegenden zweiten Vorderrad bis zum Erreichen des Radanlaufdrucks abgebaut. In der Zeit, in der der Bremsdruck am ersten Vorderrad abgebaut wird, kann der Bremsdruck am zweiten Vorderrad entweder konstant gehalten oder mit einem kleineren Gradienten abgebaut werden. Auf diese Weise wird der eingangs genannte Pufferspeicher im Wesentlichen nur durch das Hydraulikfluid aus der ersten Vorderradbremse gefüllt und läuft nicht so schnell voll. Dadurch läuft das erste Vorderrad wesentlich schneller an als bei (Es folgt die ursprüngliche Beschreibung auf Seite 4) gleichzeitigem Druckabbau. Das erste Vorderrad kann somit schneller Seitenkräfte aufnehmen, wodurch das Fahrzeug früher wieder lenkbar wird.

In einer Fahrsituation, in der beide Vorderräder etwa gleichzeitig in Bremsschlupf geraten, wird vorzugsweise zunächst der Bremsdruck am kurvenäußeren Vorderrad und danach der Bremsdruck am kurveninneren Vorderrad abgebaut. Dies hat vor allem den Grund, dass das kurvenäußere Vorderrad mehr Seitenkraft aufnehmen und somit das Fahrzeug schneller stabilisiert werden kann. Zusätzlich erzeugt das blockierende kurveninnere Vorderrad ein Giermoment in Richtung des Fahrerlenkwunsches.

Nach Erreichen des Radanlaufdrucks an einem Rad wird für dieses Rad vorzugsweise eine normale ABS-Regelung in einem Standardmodus durchgeführt.

Die vorstehend beschriebene Druckabbau an den Vorderrädern wird vorzugsweise nur in einer Fahrsituation durchgeführt, in der das Fahrzeug gelenkt wird. Bei Geradeausfahrt soll der Bremsdruck weiterhin an beiden Vorderrädern etwa gleichzeitig abgebaut werden. Um das erfindungsgemäße Verfahren bei Kurvenfahrt zu aktivieren, kann ein Schwellenwert, z. B. 10 Grad oder mehr, für den Lenkwinkel vorgegeben werden. Wenn dieser überschritten wird, erfolgt der erfindungsgemäße sequentielle Druckabbau.

Der Radschlupf einzelner Räder kann beispielsweise mit Hilfe von Rad-Drehzahlsensoren gemessen werden. Der erfindungsgemäße sequentielle Druckabbau an den Radbremsen der Vorderräder wird vorzugsweise von einem Steuergerät gesteuert, in dem ein entsprechender Algorithmus hinterlegt ist.

Die Erfindung wird nachstehend anhand der beigefügten Zeichnungen beispielhaft näher erläutert. Es zeigen:
Fig. 1 den prinzipiellen Aufbau eines herkömmlichen Bremssystems, das für eine ABS-Regelung ausgelegt ist;
Fig. 2a, 2b, den zeitlichen Verlauf der Fahrzeuggeschwindigkeit und der Radgeschwindigkeiten der beiden Vorderräder, sowie den an den Vorderradbremsen wirkenden Bremsdruck;
Fig.3a, 3b den zeitlichen Verlauf der in den Fig. 2a und 2b dargestellten Größen in einer Fahrsituation, in der der Fahrer gleichzeitig lenkt und bremst; und
Fig. 4a, 4b den zeitlichen Verlauf der in den Fig. 2a und 2b dargestellten Größen in einer Fahrsituation, in der der Fahrer zunächst in Geradeausfahrt bremst und erst zu lenken beginnt, wenn die Vorderräder bereits blockieren.

Bezüglich der Erläuterungen der Fig. 1 und 2a, 2b wird auf die Beschreibungseinleitung verwiesen.

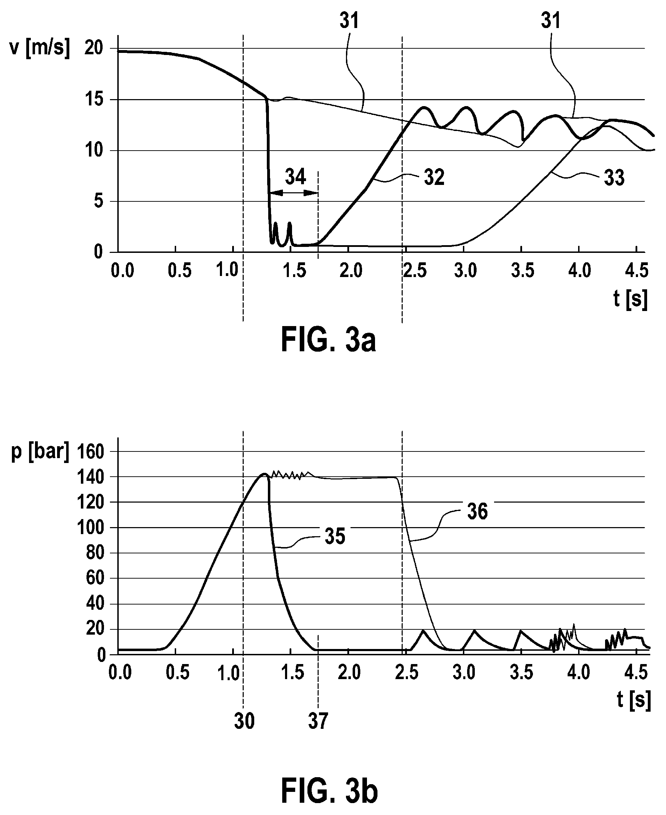

Fig. 3a zeigt den zeitlichen Verlauf der Fahrzeuggeschwindigkeit 31 und der Geschwindigkeit der beiden Vorderräder 32 und 33 in einer Fahrsituation, in der das Fahrzeug gelenkt und gleichzeitig gebremst wird. Fig. 3b zeigt den zugehörigen Verlauf des Bremsdrucks an den Vorderrädern (Kennlinien 35 und 36).

Das Fahrzeug fährt zunächst mit einer Geschwindigkeit von etwa 20 m/s geradeaus. Bei etwa 0,4 s betätigt der Fahrer die Bremse, wodurch der Bremsdruck p an den Radbremsen der beiden Vorderräder ansteigt. Bei etwa 1,1 s lenkt der Fahrer das Fahrzeug nach links (Linie 30). Der Bremsdruck steigt danach so weit an, dass der Radschlupf beider Vorderräder einen vorgegebenen Schwellenwert überschreitet. Durch einen automatischen Eingriff der ABS-Regelung wird der Bremsdruck zunächst am kurvenäußeren (rechten) Vorderrad abgebaut (Kennlinie 35). Der Bremsdruck am kurveninneren (linken) Vorderrad bleibt während dieser Zeit im Wesentlichen konstant (Kennlinie 36). Es fließt daher nur Hydraulikfluid aus der rechten Radbremse 4 in den Pufferspeicher 9, wodurch der Pufferspeicher 9 nicht so schnell voll läuft. Der Bremsdruck am rechten Vorderrad (Kennlinie 35) kann damit wesentlich schneller als in Fig. 2 bis zum Erreichen des Radanlaufdrucks abgebaut werden. Das rechte Vorderrad läuft daher bereits ab dem Zeitpunkt 1,7 s wieder an (Bezugszeichen 37) und kann wieder Seitenkräfte aufnehmen. Die Radstillstandszeit 34, in der beide Vorderräder blockieren, beträgt somit nur noch etwa 0,3 s.

Der Bremsdruck am kurveninneren (linken) Vorderrad wird nach einer vorgegebenen Zeit ebenfalls bis zum Erreichen des Radanlaufdrucks abgebaut. Der Druckabbau am kurveninneren Vorderrad kann beispielsweise zu einem Zeitpunkt beginnen, in dem das kurvenäußere (rechte) Vorderrad etwa die Fahrzeuggeschwindigkeit v erreicht.

Nach dem Erreichen des Radanlaufdrucks wird an beiden Vorderradbremsen eine herkömmliche ABS-Regelung durchgeführt, bei der der Bremsdruck moduliert wird.

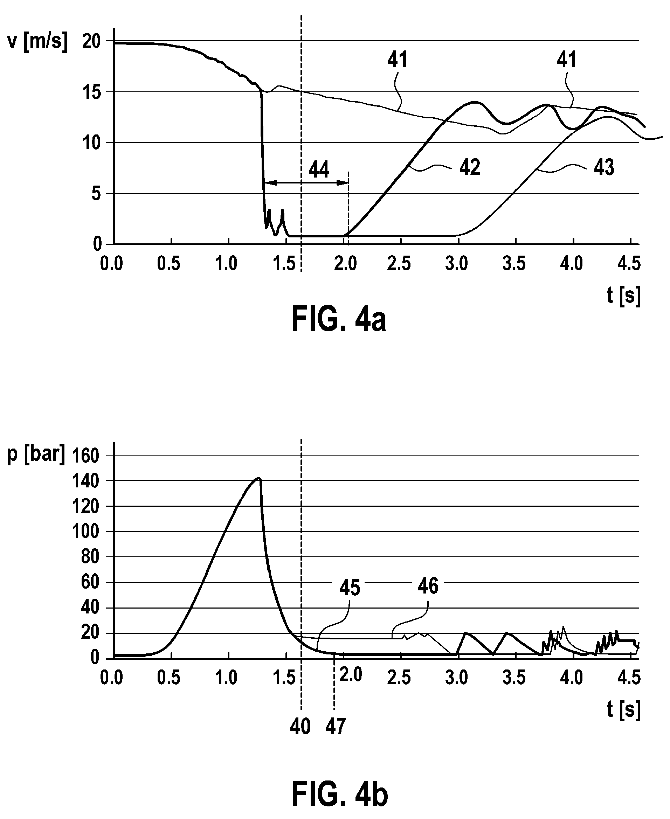

Die Fig. 4a und 4b zeigen den zeitlichen Verlauf derselben physikalischen Größen wie Fig. 3a und 3b, allerdings in einer Fahrsituation, in der der Fahrer zunächst in Geradeausfahrt bremst und erst dann zu lenken beginnt, wenn die Vorderräder bereits blockieren.

Im dargestellten Beispiel betätigt der Fahrer, wie in den Fig. 3a,3b, zunächst das Bremspedal, wodurch sich der Bremsdruck an den Vorderrädern aufbaut (s. Kennlinien 45 und 46). Die Vorderräder geraten bei etwa 1,4 s in Schlupf, wodurch die ABS-Regelung auslöst und der Bremsdruck an beiden Vorderrädern gleichzeitig abgebaut wird. Bei etwa 1,6 s (gestrichelte Linie 40) beginnt der Fahrer zu lenken. Sobald die Lenkbewegung vom System erkannt wurde, wird der Druckabbau an der Radbremse des kurveninneren Vorderrades (Kennlinie 46) gestoppt. Die Rückforderpumpe 6 muss daher nur noch das Hydraulikfluid der rechten Vorderradbremse zurück in Richtung Hauptbremszylinder 1 fördern. Dadurch kann der an der rechten Vorderradbremse herrschende Bremsdruck (s. Kennlinie 45) schneller abgebaut werden.

Auch in diesem Fall ist die Radstillstandszeit 44 wesentlich kürzer als bei einem gleichzeitigen Druckabbau gemäß dem Stand der Technik, wie er in den Fig. 2a und 2b dargstellt ist. Der Radanlaufdruck des rechten Vorderrades wird bei etwa 2,0 s erreicht (Nr. 47). Sobald die Radgeschwindigkeit des rechten Vorderrades (Kennlinie 42) die Fahrzeuggeschwindigkeit v erreicht hat, wird auch der Bremsdruck an der linken Vorderradbremse bis zum Erreichen des Radanlaufdrucks abgebaut (Kennlinie 46). Danach erfolgt eine herkömmliche ABS-Regelung an beiden Vorderrädern.

## Patentansprüche

1. Verfahren zum Stabilisieren eines Fahrzeugs während eines Bremsmanövers, **dadurch gekennzeichnet, dass**
- der Fahrzustand hinsichtlich einer Fahrsituation überwacht wird, in der der Radschlupf der Vorderräder größer ist als ein vorgegebener Schwellenwert und außerdem eine Lenkanforderung vorliegt, und, wenn eine solche Fahrsituation erkannt wurde,
- der Bremsdruck (p) zuerst an einem ersten Vorderrad und danach an einem auf der anderen Fahrzeugseite liegenden zweiten Vorderrad bis zum Erreichen eines Radanlaufdrucks abgebaut wird.

2. Verfahren nach Anspruch 1, **dadurch gekennzeichnet, dass** während der Zeitspanne, in der der Bremsdruck am ersten Vorderrad abgebaut wird, der am zweiten Vorderrad herrschende Bremsdruck konstant gehalten oder mit einem kleineren Gradienten abgebaut wird.

3. Verfahren nach Anspruch 1 oder 2, **dadurch gekennzeichnet, dass** zunächst der am kurvenäußeren Vorderrad herrschende Bremsdruck und danach der am kurveninneren Vorderrad herrschende Bremsdruck abgebaut wird.

4. Verfahren nach einem der vorhergehenden Ansprüche, **dadurch gekennzeichnet, dass** der am ersten Vorderrad herrschende Bremsdruck durch Öffnen eines zugehörigen Auslassventils abgebaut wird.

5. Verfahren nach einem der vorhergehenden Ansprüche, **dadurch gekennzeichnet, dass** der am zweiten Vorderrad herrschende Bremsdruck durch vollständiges Schließen oder teilweises Öffnen eines zugehörigen Auslassventils konstant gehalten oder mit geringem Gradienten abgebaut wird.

6. Verfahren nach einem der vorhergehenden Ansprüche, **dadurch gekennzeichnet, dass** nach Erreichen eines Radanlaufdrucks an einem Rad für dieses Rad die normale ABS-Regelung durchgeführt wird.

7. Verfahren nach einem der vorhergehenden Ansprüche, **dadurch gekennzeichnet, dass** überprüft wird, ob der Lenkwinkel einen vorgegebenen Schwellenwert überschreitet, und der sequentielle Druckabbau nur für den Fall ausgeführt wird, dass der Lenkwinkel den vorgegebenen Schwellenwert überschreitet.

8. Steuergerät, umfassend Mittel, die ein Verfahren nach einem der Ansprüche 1 bis 7 ausführen.

## Claims

1. Method for stabilizing a vehicle during a braking manoeuvre, **characterized in that**
- the driving state is monitored in respect of a driving situation in which the wheel slip of the front wheels is greater than a predefined threshold value and there is also a steering request, and if such a driving situation has been detected,
- the brake pressure (p) is firstly reduced at a first front wheel and then at a second front wheel, on the other side of the vehicle, until a wheel starting pressure is reached.

2. Method according to Claim 1, **characterized in that** during the time period in which the brake pressure at the first front wheel is reduced the brake pressure which is present at the second front wheel is kept constant or is reduced with a smaller gradient.

3. Method according to Claim 1 or 2, **characterized in that** firstly the brake pressure which is present at the front wheel on the outside of the bend and then the brake pressure which is present at the front wheel on the inside of the bend is reduced.

4. Method according to one of the preceding claims, **characterized in that** the brake pressure which is present at the first front wheel is reduced by opening an associated outlet valve.

5. Method according to one of the preceding claims, **characterized in that** the brake pressure which is present at the second front wheel is kept constant or is reduced with a small gradient by completely closing or partially opening an associated outlet valve.

6. Method according to one of the preceding claims, **characterized in that** after a wheel starting pressure is reached at a wheel, the normal ABS control is carried out for this wheel.

7. Method according to one of the preceding claims, **characterized in that** it is checked whether the steering angle exceeds a predefined threshold value, and sequential reduction in pressure is carried out only for the case in which the steering angle exceeds the predefined threshold value.

8. Controller, comprising means which carry out a method according to one of Claims 1 to 7.

## Revendications

1. Procédé de stabilisation d'un véhicule pendant une manoeuvre de freinage, **caractérisé en ce que** :
- l'état de conduite est surveillé par rapport à une situation de conduite dans laquelle le patinage de roue des roues avant est supérieur à une valeur seuil prédéfinie en présence d'une demande de braquage et que lorsqu'une telle situation de conduite est reconnue;
- la pression de freinage (p) est d'abord diminuée au niveau d'une première roue avant puis au niveau d'une deuxième roue avant située de l'autre côté du véhicule jusqu'à atteindre une pression de contact de roue.

2. Procédé selon la revendication 1, **caractérisé en ce que** pendant l'intervalle de temps pendant lequel la pression de freinage est diminuée au niveau de la première roue avant, la pression de freinage régnant au niveau de la deuxième roue avant est maintenue constante ou réduite selon un plus petit gradient.

3. Procédé selon la revendication 1 ou 2, **caractérisé en ce que** la pression de freinage régnant au niveau de la roue avant située à l'extérieur du virage est d'abord diminuée, suivie de la pression de freinage régnant au niveau de la roue avant située à l'intérieur du virage.

4. Procédé selon l'une quelconque des revendications précédentes, **caractérisé en ce que** la pression de freinage régnant au niveau de la première roue avant est diminuée en ouvrant une soupape d'échappement associée.

5. Procédé selon l'une quelconque des revendications précédentes, **caractérisé en ce que** la pression de freinage régnant au niveau de la deuxième roue avant est maintenue constante ou réduite d'un gradient limité en fermant entièrement ou en ouvrant partiellement une soupape d'échappement.

6. Procédé selon l'une quelconque des revendications précédentes, **caractérisé en ce qu'**une fois une pression de contact de roue atteinte au niveau d'une roue, la régulation ABS normale est mise en oeuvre pour cette roue.

7. Procédé selon l'une quelconque des revendications précédentes, **caractérisé en ce que** l'on vérifie si l'angle de braquage dépasse une valeur seuil prédéfinie et que la baisse de pression séquentielle n'est réalisée que dans le cas dans lequel l'angle de braquage dépasse la valeur seuil prédéfinie.

8. Appareil de commande, comprenant des moyens de mettre en oeuvre un procédé selon l'une quelconque des revendications 1 à 7.
